# FASCICULE DE BREVET EUROPEEN

(11) **EP 3 992 494 B1**
(45) Date de publication et mention de la délivrance du brevet: **07.06.2023**
(21) Numéro de dépôt: 21194512.6
(22) Date de dépôt: 02.09.2021
(51) Int. Cl.: F16H 1/28, F16H 57/04, F16C 17/02, F16H 57/08

(54) **REDUCTEUR MECANIQUE DE TURBOMACHINE D'AERONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 04.09.2020 FR 2009003
(43) Date de publication de la demande: 04.05.2022
(73) Titulaire: Safran Transmission Systems, 92700 Colombes (FR)
(72) Inventeur: SIMON, Adrien Louis, 77550 MOISSY-CRAMAYEL (FR); MOULY, Guillaume Pierre, 77550 MOISSY-CRAMAYEL (FR); PAP, Bálint, 77550 MOISSY-CRAMAYEL (FR)
(74) Mandataire: Gevers & Orès

(56) Documents cités:
- DE-A1-102017 127 874
- DE-A1-102018 009 737
- US-A1- 2019 011 039
- US-A1- 2020 191 256

## Description

### Domaine technique de l'invention

La présente invention concerne le domaine des réducteurs mécaniques pour des turbomachines en particulier d'aéronef, et en particulier les réducteurs équipés de satellites à double étage d'engrènement.

### Arrière-plan technique

L'état de l'art comprend notamment les documents US-A1-2019/011039 DE-A1-102017127874, US-A1-2020/191256, WO-A1-2010/092263, FR-A1-2 987 416, FR-A1-3 011 901, FR-A1-3 041 054, FR-A1-3 058 493, FR-A1-3 066 792, FR-A1-3 069 301 et FR-A1-3 076 336.

Le rôle d'un réducteur mécanique est de modifier le rapport de vitesse et de couple entre l'axe d'entrée et l'axe de sortie d'un système mécanique.

Les nouvelles générations de turbomachines à flux multiples, notamment celles ayant un haut taux de dilution, comportent un réducteur mécanique pour entraîner l'arbre d'une hélice carénée ou non (aussi appelé « fan »). De manière usuelle, le réducteur a pour but de transformer la vitesse de rotation dite rapide de l'arbre d'une turbine de puissance en une vitesse de rotation plus lente pour l'arbre entraînant l'hélice.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à flux multiples, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Par ailleurs, chaque satellite est centré et guidé en rotation autour d'un axe par un palier qui est porté par le porte-satellites. Il existe plusieurs technologies de palier pour cette application et la présente demande concerne plus spécifiquement l'utilisation de paliers hydrodynamiques de guidage des satellites dans un réducteur mécanique.

Dans la présente demande, on entend par « palier hydrodynamique », un palier comportant un corps engagé dans un satellite et autour duquel est situé au moins un film d'huile sous pression. Dans l'état de la technique, un palier hydrodynamique de satellite comprend un corps cylindrique comportant une surface cylindrique externe qui s'étend à l'intérieur d'une surface cylindrique interne du satellite. Le film d'huile sous pression est intercalé entre ces surfaces et permet de ne pas avoir de contact entre ces surfaces.

Une des problématiques d'un réducteur mécanique concerne le risque de désalignements des satellites. Cette problématique est amplifiée dans le cas de satellites à double étage car des moments non négligeables s'appliquent sur les satellites en fonctionnement. Ces moments sont complexes à prendre en compte lors du dimensionnement des paliers qui risquent de s'arc-bouter. Les architectures dotées d'au moins un étage de dentures hélicoïdales nécessitent l'emploi de butées de reprise des efforts axiaux. Cependant, l'installation de ces butées génère un encombrement axial conséquent. L'encombrement disponible sous les dentures n'est pas uniforme. S'il y a deux dentures sur un satellite, l'une de ces dentures est plus petite que l'autre et impose une petite taille à un palier hydrodynamique classique.

Il existe donc un besoin de gérer la reprise des moments qui s'appliquent sur les paliers des satellites, qui ont tendance à être difficiles à prédire et dimensionner, et à faire apparaître des risques de surconsommation d'huile, et d'arc-boutement et de blocage des paliers.

### Résumé de l'invention

L'invention concerne un réducteur mécanique de turbomachine, en particulier d'aéronef, ce réducteur comportant :
- un solaire ayant un axe de rotation et comportant une denture externe,
- une couronne qui s'étend autour du solaire et qui comporte une denture interne,
- des satellites qui sont engrenés avec le solaire et la couronne et qui comportent chacun une première denture de premier diamètre moyen D32 engrenée avec la denture du solaire, et une seconde denture de second diamètre moyen D28, différent de D32, engrenée avec la denture interne de la couronne, les satellites étant guidés par des paliers hydrodynamiques portés par un porte-satellites,
caractérisé en ce que le palier hydrodynamique de guidage de chaque satellite comprend une première surface lisse de guidage s'étendant autour d'un axe de rotation du satellite, au moins en partie sous la première denture, et une seconde surface lisse de guidage, différente de ladite première surface et s'étendant autour de l'axe de rotation du satellite, au moins en partie sous la seconde denture.

L'invention propose ainsi de guider les dentures de diamètres différents par des surfaces de guidage différentes. On comprend qu'un premier film d'huile est intercalé entre la première surface et le satellite, et qu'un second film d'huile est intercalé entre la seconde surface et le satellite.

La seconde surface est par exemple configurée pour reprendre principalement les efforts radiaux et tangentiels qui s'appliquent sur le satellite en fonctionnement. La première surface est par exemple configurée pour absorber le restant des moments et les efforts d'engrènement de la première denture.

Les surfaces de guidage du palier étant différentes et ayant de préférence des diamètres différents, le palier peut avoir une forme étagée qui facilite l'intégration d'une butée axiale dans ce palier pour coopérer avec le satellite. On comprend dès lors que cette butée n'a pas besoin d'être prévue sur un autre élément du réducteur tel que le porte-couronne par exemple.

Cette invention peut apporter plusieurs avantages parmi lesquels :
- l'optimisation de la consommation en huile du palier hydrodynamique,
- la réduction des pics de pression dans les coins d'huile du palier hydrodynamique, et
- l'optimisation et par exemple le surépaississement des films d'huile du palier hydrodynamique.

Cette invention est compatible :
- d'un réducteur à plusieurs étages,
- d'un réducteur dit épicycloïdal, planétaire ou différentiel,
- de dentures droites, hélicoïdales ou en chevron,
- de tout type de porte-satellites qu'il soit monobloc ou de type cage et porte-cage,
- de palier satellite du type lisse ou hydrodynamique.

Selon l'invention, la première surface est située sur une première portion axiale d'un corps du palier hydrodynamique, et la seconde surface est située sur une seconde portion axiale du corps du palier hydrodynamique, ces deux portions étant reliées entre elles par un premier voile annulaire du corps. Le réducteur selon l'invention peut comprendre une ou plusieurs des caractéristiques suivantes, prises isolément les unes des autres, ou en combinaison les unes avec les autres :
- la première surface a un troisième diamètre D26c2 ou troisième diamètre moyen inférieur à D32, et la seconde surface a un quatrième diamètre D26c1 ou quatrième diamètre moyen différent de D26c1 et inférieur à D28;
- le premier diamètre moyen D32 de la première denture est supérieur au second diamètre moyen D28 de la seconde denture ;
- la première portion axiale du satellite a une surface cylindrique interne ayant un cinquième diamètre D32a, et la seconde portion axiale du satellite a une surface cylindrique interne ayant un sixième diamètre D28a ;
   -- D32a est inférieur à D28a ;
   -- D32a est supérieur à D28a ;
- le premier voile annulaire comprend un rebord cylindrique d'appui axial du satellite monté sur le palier hydrodynamique ;
- le premier voile annulaire s'étend dans un plan perpendiculaire à l'axe de rotation du satellite ;
- le premier voile annulaire comprend une partie annulaire à section en C ;
- chacun des satellites comprend un corps tubulaire relié par un second voile à la première denture, ce second voile annulaire comprend des orifices traversants de passage d'huile ;
- la première surface s'étend au moins en partie autour de la seconde surface ;
- la première surface a une longueur représentant plus de 20% d'une longueur de la seconde surface ;
- les première et seconde surfaces sont désaxées ;
- au moins une des première et seconde surfaces est cylindrique ;
- au moins une des première et seconde surfaces est elliptique en section transversale.

La présente invention concerne encore une turbomachine d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine d'aéronef,
[Fig.2] la figure 2 est une section axiale en vue partielle d'un réducteur mécanique,
[Fig.3] la figure 3 est une vue schématique en coupe axiale d'un réducteur mécanique équipé de satellites à double étage d'engrènement, et illustre la technique antérieure à l'invention,
[Fig.4] la figure 4 est une vue schématique en perspective d'un corps d'un palier hydrodynamique du réducteur de la figure 3,
[Fig.5] la figure 5 est une vue schématique partielle en coupe axiale d'un palier hydrodynamique et d'un satellite selon un premier mode de réalisation d'un réducteur mécanique selon l'invention,
[Fig.6] la figure 6 une vue schématique en perspective d'un corps du palier hydrodynamique de la figure 5,
[Fig.7] la figure 7 est une vue schématique partielle en coupe axiale d'un palier hydrodynamique et d'un satellite selon un second mode de réalisation d'un réducteur mécanique selon l'invention,
[Fig.8] la figure 8 est une vue schématique partielle en coupe axiale d'un palier hydrodynamique et d'un satellite selon un troisième mode de réalisation d'un réducteur mécanique selon l'invention,
[Fig.9] la figure 9 est une vue schématique partielle en coupe axiale d'un palier hydrodynamique et d'un satellite selon un quatrième mode de réalisation d'un réducteur mécanique selon l'invention,
[Fig.10] la figure 10 une vue schématique en perspective d'un corps du palier hydrodynamique de la figure 9,
[Fig.11a-11b] les figures 11a et 11b sont des vues schématiques en coupe transversale d'un palier hydrodynamique et d'un satellite, la figure 11a montrant un cas où les surfaces de guidage du palier sont coaxiales et la figure 11b montrant une variante où ces surfaces sont désaxées, et
[Fig.12a-12b] les figures 12a et 12b sont des vues schématiques en coupe transversale d'un palier hydrodynamique et d'un satellite, la figure 12a montrant un cas où les surfaces de guidage du palier sont cylindriques et la figure 12b montrant une variante où ces surfaces ont en section transversale une forme elliptique.

### Description détaillée de l'invention

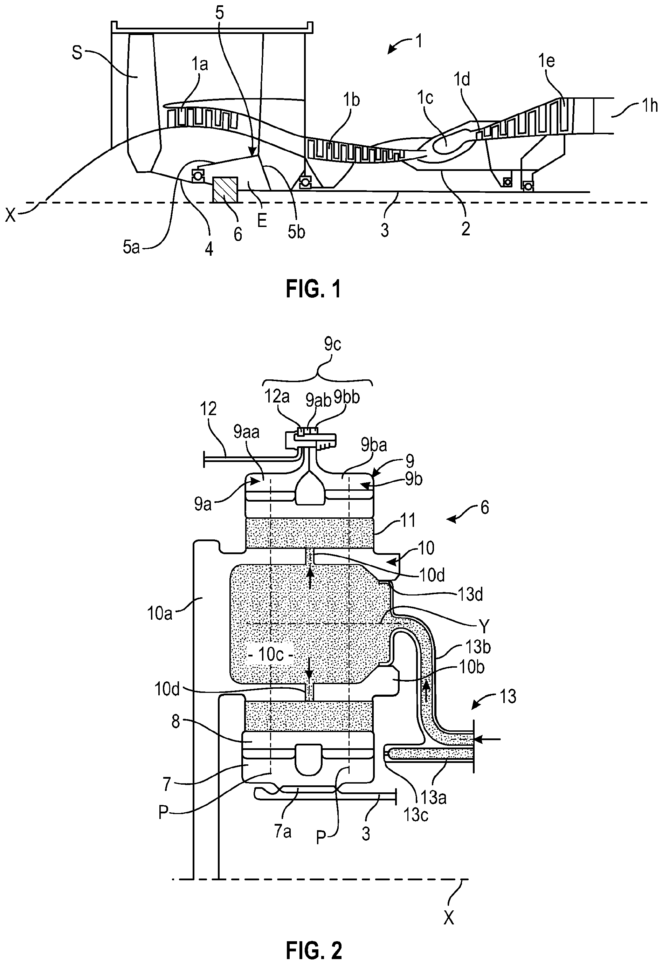

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

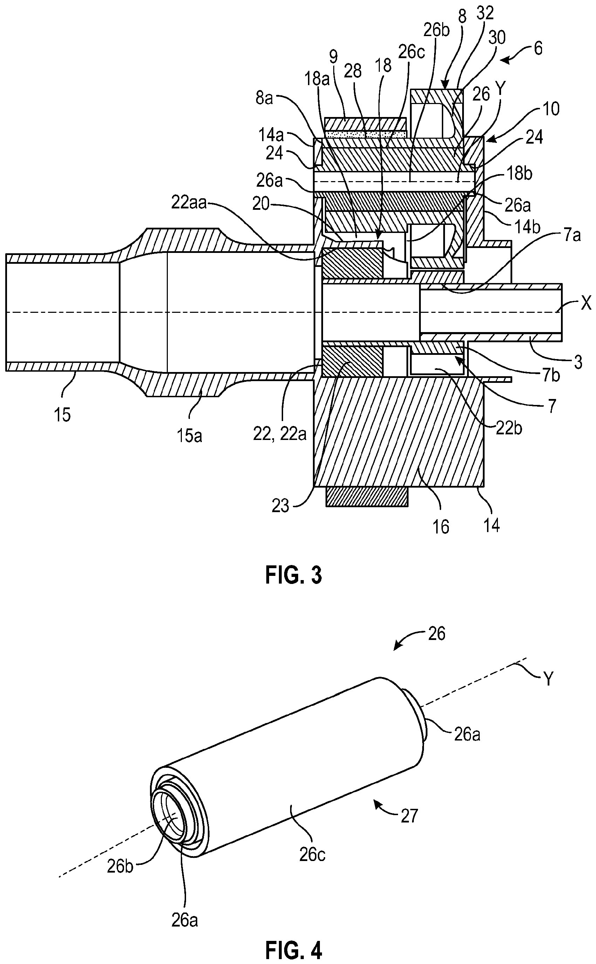

La figure 3 représente un réducteur 6 de turbomachine d'aéronef selon la technique antérieure.

Le réducteur 6 comprend un porte-satellites 10 qui est configuré pour être mobile en rotation autour de l'axe X et qui est du type monobloc, c'est-à-dire formé d'une seule pièce.

Ce porte-satellites 10 comprend une cage 14 et une portion d'arbre 15.

La portion d'arbre 15 a une forme générale tubulaire et allongée le long de l'axe X et comprend une extrémité longitudinale libre, ici à gauche sur les dessins, et une extrémité longitudinale opposée de liaison à la cage 14.

La portion d'arbre 15 comprend une denture externe 15a d'engrènement, par exemple avec une soufflante.

La cage 14 comporte deux flasques annulaires 14a, 14b qui sont parallèles et à distance l'un de l'autre et s'étendent perpendiculairement à l'axe X. Les flasques 14a, 14b ont une forme générale circulaire et sont centrées sur l'axe X.

Le flasque 14a, appelé premier flasque, à gauche sur le dessin, est relié à la portion d'arbre 15. L'autre flasque 14b est appelé second flasque.

Les flasques 14a, 14b sont reliés entre eux par des ponts de matière 16 qui définissent entre eux et avec les flasques des logements 18 configurés pour recevoir les satellites 8. Les logements 18 débouchent radialement vers l'extérieur à la périphérie externe de la cage 14, et débouchent également radialement à l'intérieur en traversant une paroi tubulaire interne 20 de la cage 14. Les ponts de matière 16 peuvent être pleins ou en partie évidés, comme illustré à la figure 3.

La paroi 20 s'étend autour de l'axe X, depuis le premier flasque 14a en direction du second flasque 14b. Elle s'étend ici sensiblement dans le prolongement axial de la portion d'arbre 15. Cette paroi 20 délimite intérieurement un espace 22 de logement du solaire 7.

Cet espace 22 comprend deux parties adjacentes. La première partie 22a est entourée par la paroi 20 qui comprend une surface cylindrique interne 22a de montage d'un palier 23 de guidage d'une extrémité du solaire 7. La seconde partie 22b, située au niveau des débouchés des logements 18, reçoit l'extrémité opposée du solaire 7, qui comprend une denture externe 7b d'engrènement avec les satellites 8. Le solaire 7 comprend en outre une denture interne 7a d'accouplement à un arbre par exemple de turbine.

Les logements 18 comportent chacun une première partie 18a qui est située du côté du premier flasque 14a, et une seconde partie 18b qui est située du côté du second flasque 14b. Les logements 18 débouchent à la périphérie externe de la cage 14, au niveau de ses deux parties 18a, 18b, et à la périphérie interne de la cage 14, au niveau des secondes parties 18b seulement.

Les flasques 14a, 14b comprennent des trous ou orifices 24 alignés de montage des satellites 8 et en particulier de paliers hydrodynamiques 26 de guidage de ces satellites 8.

Chaque palier hydrodynamique 26 comprend un corps 27 autour duquel est situé un film d'huile sous pression.

Le corps 27 d'un palier 26 est représenté seul à la figure 4. Il a une forme générale cylindrique qui s'étend le long de l'axe Y et dont les extrémités longitudinales comprennent des extensions 26a logées dans les orifices 24 formant des sièges.

Le corps 27 peut également être tubulaire et comprendre un alésage interne 26b de circulation d'huile qui communique en général avec des conduits d'amenée d'huile jusqu'à une surface cylindrique externe 26c du corps en vue de la formation du film d'huile entre cette surface 26c et une surface cylindrique interne du satellite 8.

Les satellites 8 sont du type à double étage d'engrènement, comme évoqué dans ce qui précède, et comprennent chacun un corps tubulaire 8a relié par un voile 30 à une première denture 32 externe, le corps 8a étant lui-même équipé d'une seconde denture 28.

Les dentures 28, 32 sont disposées à côté l'une de l'autre et plus particulièrement sont situées respectivement dans deux plans perpendiculaires à l'axe Y.

La seconde denture 28, située à gauche sur les dessins, est située du côté du premier flasque 14a et donc au niveau de la première partie 18a du logement. Comme cela est visible à la figure 3, cette denture 28 est engrenée avec la couronne 9.

La première denture 32, située à droite sur les dessins, est située du côté du second flasque 14b et donc au niveau de la seconde partie 18b du logement. Comme cela est visible à la figure 3, cette denture 32 est engrenée avec la denture 7b du solaire 7.

La couronne 9 est portée par un porte-couronne qui n'est pas représenté dans les dessins.

L'invention propose une solution pour gérer les moments qui s'appliquent sur les paliers hydrodynamiques 26 des satellites en fonctionnement.

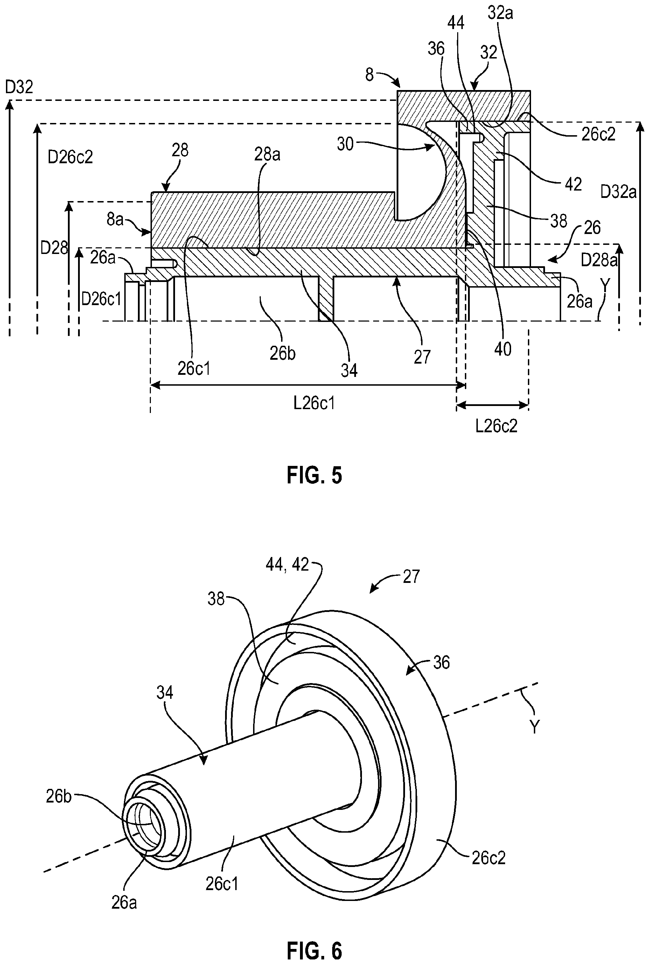

Les figures 5 et 6 illustrent un premier mode de réalisation d'un réducteur selon l'invention et en particulier d'un palier hydrodynamique 26 et d'un satellite 8 pour ce réducteur.

Le réducteur comprend l'ensemble des caractéristiques décrites dans ce qui précède en relation avec la figure 3 dans la mesure où elles ne sont pas contraires ou ne contredisent pas ce qui suit.

Les références utilisées dans les figures 5 et 6 et déjà utilisées dans la figure 3 désignent donc des éléments identiques ou similaires.

La description qui suit concerne un satellite 8 et son palier hydrodynamique 26 de guidage mais on comprend qu'elle s'applique à l'ensemble des satellites et paliers hydrodynamiques du réducteur.

Le satellite 8 est du type à double étage d'engrènement et comprend un corps tubulaire 8a relié par un voile 30 à une première denture 32 externe, le corps 8a étant lui-même équipé d'une seconde denture 28.

Les dentures 28, 32 sont disposées à côté l'une de l'autre et plus particulièrement sont situées respectivement dans deux plans perpendiculaires à l'axe Y.

La seconde denture 28, située à gauche sur les dessins, est destinée à être engrenée avec la couronne 9. La première denture 32, située à droite sur les dessins, est destinée à être engrenée avec la denture 7b du solaire 7. Dans l'exemple représenté, le voile 30 a en section une forme en C dont l'ouverture est orientée axialement du côté de la denture 28. Cette forme particulière confère au satellite 8 une certaine souplesse en direction radiale, par déformation élastique de ce voile.

La denture 28 a un second diamètre ou second diamètre moyen D28 qui est inférieur au premier diamètre ou premier diamètre moyen D32 de la denture 32 dans l'exemple représenté.

La denture 28 est située sur une portion axiale ou un tronçon du satellite 8, qui a une surface cylindrique interne 28a de sixième diamètre D28a. De la même façon, la denture 32 est située sur une portion axiale ou un tronçon du satellite 8, qui a une surface cylindrique interne 32a de cinquième diamètre D32a.

D32a est ici supérieur à D28 et D28a.

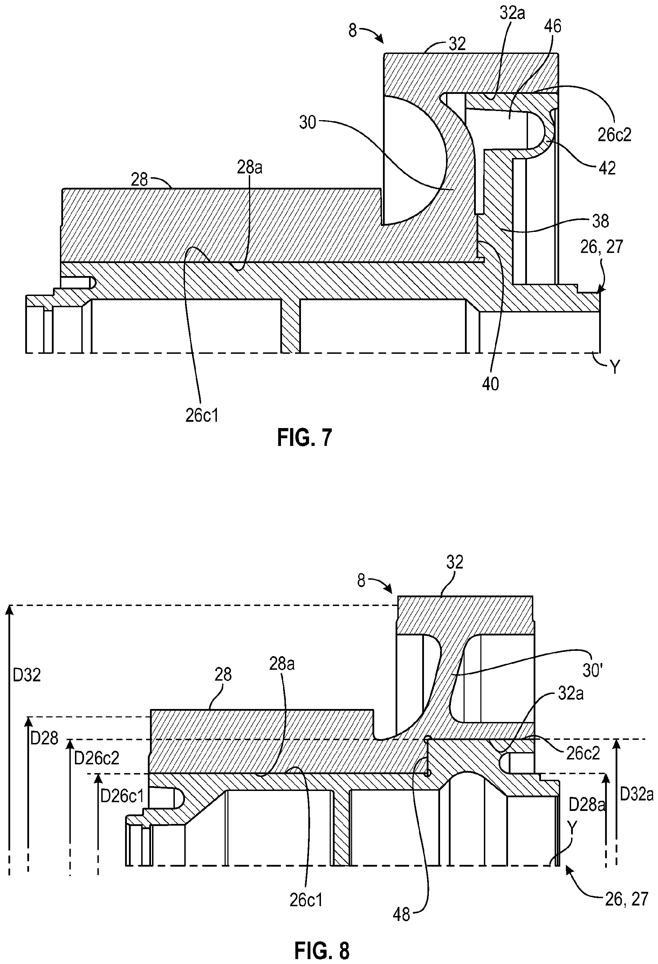

Par ailleurs, la figure 8 permet de constater que la surface 32a peut s'étendre au moins en partie autour de la surface 28a.

Le corps 27 du palier hydrodynamique 26 est représenté seul à la figure 6. Il a une forme générale cylindrique et étagé le long de l'axe Y. Les extrémités longitudinales du corps 27 comprennent des extensions 26a logées dans les orifices 24 du porte satellites, comme évoqué dans ce qui précède.

Le corps 27 est également tubulaire et comprend un alésage interne 26b de circulation d'huile qui communique avec des conduits d'amenée d'huile (non représentés) jusqu'à des surfaces de guidage 26c1, 26c2 du corps en vue de la formation de films d'huile entre ces surfaces 26c1, 26c2 et les surfaces 28a, 32a du satellite 8.

La surface 26c1 s'étend à l'intérieur et en regard de la surface 28a et avec un jeu prédéterminé en fonction de l'épaisseur du film d'huile destiné à être intercalé entre ces surfaces 26c1, 28a.

La surface 26c1 est située sur une portion axiale 34 ou un tronçon du corps 27 et a un quatrième diamètre D26c1 et une longueur L26c1.

La surface 26c2 s'étend à l'intérieur et en regard de la surface 32a et avec un jeu prédéterminé en fonction de l'épaisseur du film d'huile destiné à être intercalé entre ces surfaces 26c2, 32a.

La surface 26c2 est située sur une portion axiale 36 ou un tronçon du corps 27 et a un troisième diamètre D26c2 et une longueur L26c2.

D26c2 est ici supérieur à D28 et D28a.

L26c2 est ici inférieur à L26c1 et représente par exemple au moins 20% de L26c1.

Par ailleurs, la figure 5 permet de constater que la surface 26c2 peut s'étendre au moins en partie autour de la surface 26c1, ce qui permet d'améliorer la reprise des charges.

Dans le mode de réalisation représenté aux figures 5 et 6, les portions 34, 36 du corps 27 portant les surfaces 26c1 et 26c2 sont reliées entre elles par un premier voile annulaire 38 qui s'étend dans un plan perpendiculaire à l'axe Y.

Ce premier voile 38 comprend de préférence un rebord cylindrique 40 d'appui axial du satellite 8, comme visible à la figure 5. Ce rebord 40 peut coopérer par appui avec une extrémité axiale de la denture 28 ou du corps 8a, ou la périphérie interne du premier voile 38.

La périphérie externe du premier voile 38 peut être reliée directement à la portion 36 ou bien par une partie annulaire 42 comportant une rainure annulaire 44 débouchant axialement, par exemple du côté de la denture 28 (figure 5), ou ayant en section axiale une forme générale en C (figure 7). Ces aménagements, et en particulier celui de la figure 7, permettent de conférer une certaine souplesse en direction radiale au corps 27 du palier 26.

On comprend donc que le satellite 8, d'une part, et le corps 27 du palier, d'autre part, peuvent avoir une certaine souplesse, ce qui est avantageux car cela rend indépendant le guidage des deux dentures 28, 32 du satellite 8, et en particulier la raideur, l'excitation et la reprise de charge dans le palier pour chacune des dentures.

Dans l'exemple représenté à la figure 7, la partie en section en C comprend une ouverture 46 qui débouche du côté de la denture 28. La partie 42 peut s'étendre sur une dimension radiale représentant environ 10 à 40% de la dimension radiale du premier voile 38.

La figure 8 représente une autre variante de réalisation dans laquelle le second voile 30' du satellite 8 a une forme tronconique, et est ici évasée du côté de la denture 32. Ceci permet de reprendre les efforts d'engrènement de la denture 32.

Par ailleurs, bien que cette caractéristique pourrait être présente avec un voile 30 du type de celui de la figure 5 ou 7, les surfaces 26c2 et 32a ont ici des troisième et cinquième diamètres D26c2, D32a inférieurs à D28 et supérieurs à D28a et D26c1 .

Ce mode de réalisation permet de réduire le nombre de Reynolds du film d'huile situé entre les surfaces 26c2 et 32a.

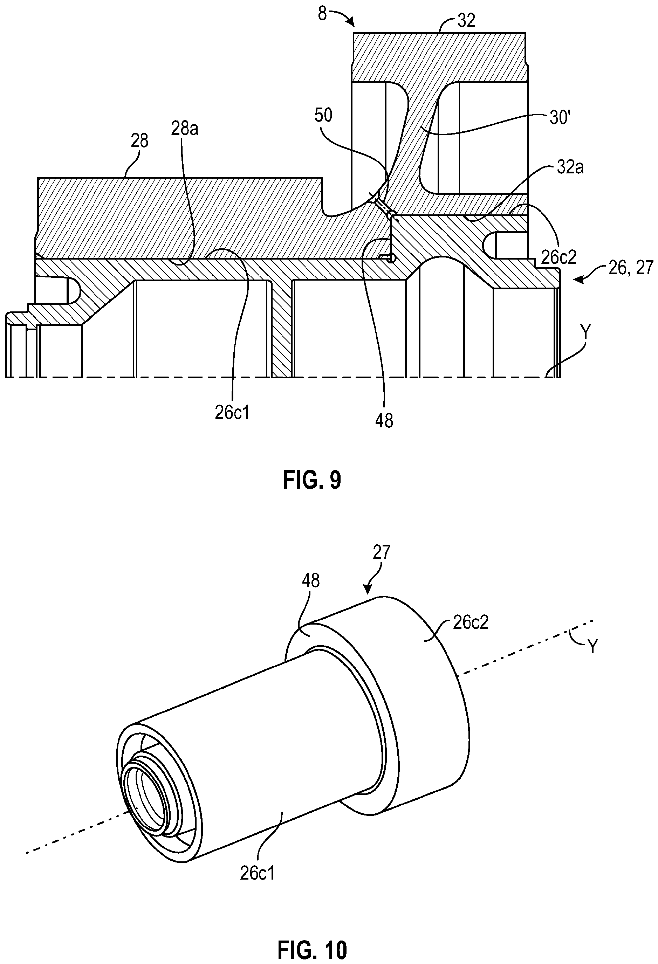

Les surfaces 26c1 et 26c2 du corps 27 du palier sont reliées entre elles par une surface annulaire radiale 48 qui forme une butée axiale destinée à coopérer avec le satellite 8, et qui remplace donc le rebord 40 évoqué dans ce qui précède (figures 8 et 10).

La variante de réalisation de la figure 9 diffère de celle de la figure 8 en ce que le second voile 30' comprend des orifices 50 traversants de passage d'huile, et en particulier d'évacuation d'huile. Ces orifices sont de préférence régulièrement répartis autour de l'axe Y et sont inclinés de façon à ce que leurs extrémités axiales situées du côté de la denture 32, débouchent au niveau de l'arrête annulaire de jonction des surfaces 48 et 26c2. Les extrémités axiales opposées débouchent sur une face annulaire du second voile 30', située du côté de la denture 28.

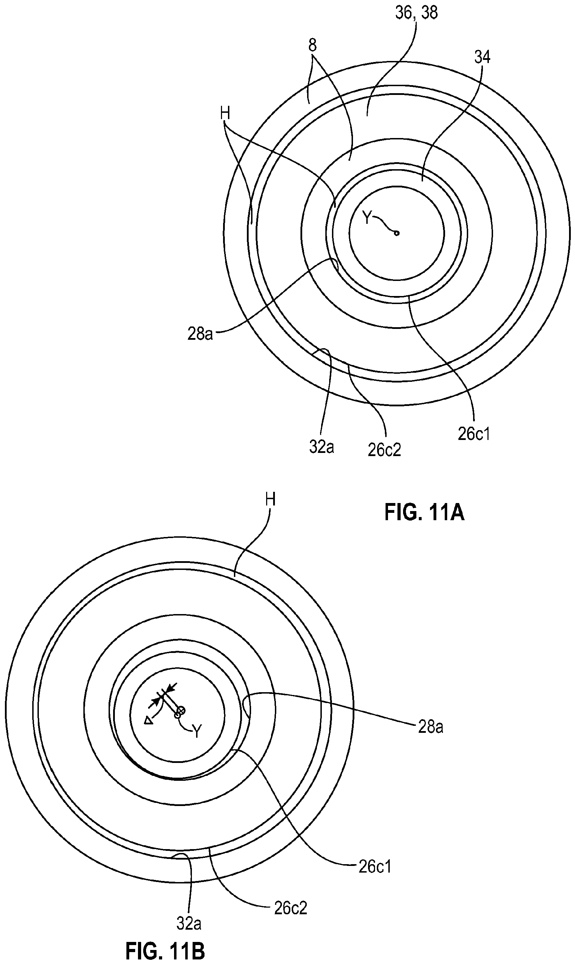

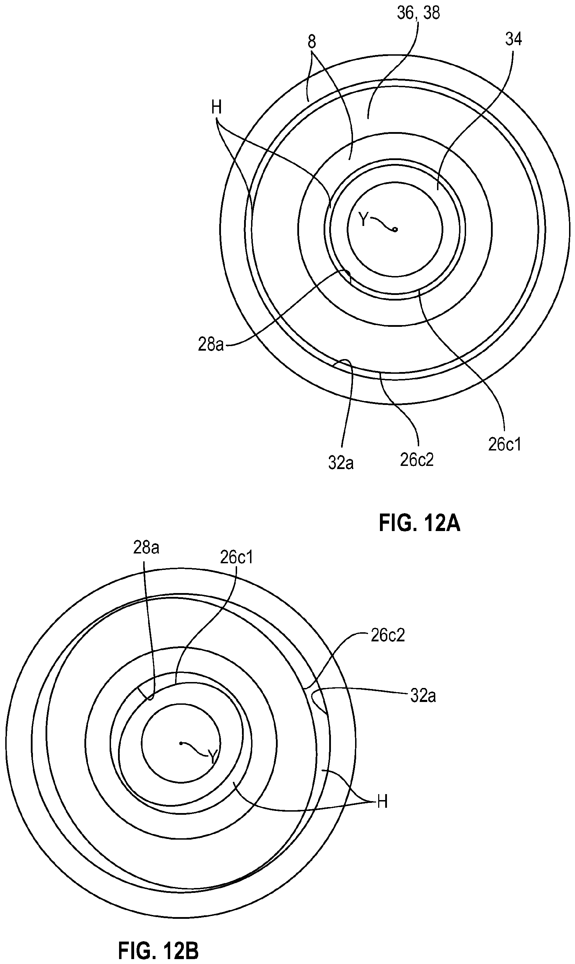

Les figures 11a et 12a sont identiques et montrent une vue en coupe transversale du satellite 8 et du palier hydrodynamique 26 de la figure 5 par exemple. Ces figures permettent de constater que les surfaces 26c1 et 26c2 sont cylindriques et sont coaxiales entre elles et avec l'axe Y. ces figures permettent également de constater les jeux radiaux entre ces surfaces et les surfaces 28a, 32a du satellite, qui sont occupés par les films d'huile H.

La variante de la figure 11b montre le cas où les surfaces 28a, 32a, 26c1 sont coaxiales entre elles et alignées sur l'axe Y mais la surface 26c2 est désaxée (décalage Δ). Cela se traduit par un film d'huile H entre les surfaces 28, 26c1 qui n'a pas la même épaisseur radiale sur toute son étendue autour de l'axe Y, contrairement au film d'huile entre les surfaces 26c2, 32a.

La variante de la figure 12b montre le cas où les surfaces 28a et 32a sont cylindriques mais les surfaces 26c1, 26c2 ont en section transversale une forme elliptique. Les surfaces 26c1, 26c2 peuvent chacune présenter deux sommets diamétralement opposés, les sommets de la surface 26c1 pouvant être décalés angulairement autour de l'axe Y par rapport aux sommets de la surface 26c2. Cela se traduit également par des films d'huile H entre les surfaces 28, 26c1 et entre les surfaces 26c2, 32a, qui n'ont pas la même épaisseur radiale sur toute leur étendue autour de l'axe Y, comme visible dans le dessin.

La variante de la figure 12b permet de diminuer les pics de pression dans les coins des films d'huile ainsi que les pertes et le débit d'huile.

Les caractéristiques de la figure 12b peuvent être combinées avec celles de la figure 11b et avec celles de chacun des modes de réalisation décrits dans ce qui précède.

L'invention peut apporter de nombreux avantages parmi lesquels :
- un fonctionnement plus sain du réducteur mécanique :
   ∘ réduction des pressions dans les films d'huile des paliers hydrodynamiques ;
   ∘ augmentation des épaisseurs minimales des films d'huile dans ces paliers ;
   ∘ réduction des épaisseurs maximales des films d'huile dans ces paliers ;
   ∘ transformation des moments aux paliers en efforts radiaux ;
- un fonctionnement optimisé :
   ∘ meilleur contrôle de la consommation d'huile des paliers ;
   ∘ amélioration du rendement du réducteur ;
   ∘ réduction de l'espace disponible dans le réducteur.

## Revendications

1. Réducteur mécanique (6) de turbomachine (1), en particulier d'aéronef, ce réducteur comportant :
- un solaire (7) ayant un axe (X) de rotation et comportant une denture externe (7b),
- une couronne (9) qui s'étend autour du solaire (7) et qui comporte une denture interne (9d),
- des satellites (8) qui sont engrenés avec le solaire (7) et la couronne (9) et qui comportent chacun une première denture (32) de premier diamètre moyen (D32) engrenée avec la denture (7b) du solaire (7), et une seconde denture (28) de second diamètre moyen (D28), différent du premier diamètre (D32) de la première denture (32), la seconde denture (28) de second diamètre (D28) étant engrenée avec la denture interne (9d) de la couronne (9), les satellites (8) étant guidés par des paliers (26) portés par un porte-satellites (10),
**caractérisé en ce que** le palier (26) de guidage de chaque satellite (8) est hydrodynamique et comprend une première surface lisse (26c2) de guidage s'étendant autour d'un axe (Y) de rotation du satellite (8), au moins en partie sous la première denture (32), et une seconde surface lisse (26c1) de guidage, différente de ladite première surface (26c1) et s'étendant autour de l'axe (Y) de rotation du satellite, au moins en partie sous la seconde denture (28), et **en ce que** la première surface (26c2) est située sur une première portion axiale (36) d'un corps (27) du palier hydrodynamique (26), et la seconde surface (26c1) est située sur une seconde portion axiale (34) du corps du palier hydrodynamique (26), ces deux portions axiales (34, 36) étant reliées entre elles par un premier voile annulaire (38) du corps du palier hydrodynamique (26).

2. Réducteur (6) selon la revendication 1, dans lequel la première surface (26c2) a un troisième diamètre (D26c2) ou troisième diamètre moyen inférieur au premier diamètre (D32) de la première denture (32), et la seconde surface (26c1) a un quatrième diamètre (D26c1) ou quatrième diamètre moyen (D26c1) inférieur au second diamètre (D28) de la seconde denture (28).

3. Réducteur (6) selon la revendication 1 ou 2, dans lequel le premier diamètre (D32) de la première denture (32) est supérieur au second diamètre (D28) de la seconde denture (28).

4. Réducteur (6) selon l'une des revendications précédentes, dans lequel le premier voile annulaire (38) comprend un rebord cylindrique (40) d'appui axial du satellite (8) monté sur le palier hydrodynamique (26).

5. Réducteur (6) selon l'une des revendications précédentes, dans lequel le premier voile annulaire (38) s'étend dans un plan perpendiculaire à l'axe (Y) de rotation du satellite (8).

6. Réducteur (6) selon l'une des revendications précédentes, dans lequel le premier voile annulaire (38) comprend une partie annulaire (42) à section en C.

7. Réducteur (6) selon l'une des revendications précédentes, dans lequel chacun des satellites (8) comprend un corps tubulaire (8a) relié par un second voile (30') à la première denture (32), ledit second voile (30') comprenant des orifices (50) traversants de passage d'huile.

8. Réducteur (6) selon l'une des revendications précédentes, dans lequel la première surface (26c2) s'étend au moins en partie autour de la seconde surface (26c1).

9. Réducteur (6) selon l'une des revendications précédentes, dans lequel la première surface (26c2) a une longueur (L26c2) représentant plus de 20% d'une longueur (L26c1) de la seconde surface (26c1).

10. Réducteur (6) selon l'une des revendications précédentes, dans lequel les première et seconde surfaces (26c2, 26c1) sont désaxées.

11. Réducteur (6) selon l'une des revendications précédentes, dans lequel au moins une des première et seconde surfaces (26c2, 26c1) est cylindrique.

12. Réducteur (6) selon l'une des revendications 1 à 10, dans lequel au moins une des première et seconde surfaces (26c2, 26c1) est elliptique en section transversale.

13. Réducteur (6) selon l'une des revendications précédentes, dans lequel une première portion axiale du satellite (8) a une surface cylindrique interne (32a) ayant un cinquième diamètre (D32a), et une seconde portion axiale du satellite (8) a une surface cylindrique interne (28a) ayant un sixième diamètre (D28a), le cinquième diamètre (D32a) étant inférieur au sixième diamètre (D28a).

14. Réducteur (6) selon l'une des revendications 1 à 12, dans lequel une première portion axiale du satellite (8) a une surface cylindrique interne (32a) ayant un cinquième diamètre (D32a), et une seconde portion axiale du satellite (8) a une surface cylindrique interne (28a) ayant un sixième diamètre (D28a), le cinquième diamètre (D32a) étant supérieur au sixième diamètre (D28a).

15. Turbomachine (1) d'aéronef, comportant un réducteur (6) selon l'une des revendications précédentes.

## Patentansprüche

1. Mechanisches Untersetzungsgetriebe (6) für eine Turbomaschine (1), insbesondere eines Luftfahrzeugs, wobei dieses Untersetzungsgetriebe umfasst:
- ein Sonnenrad (7), das eine Drehachse (X) aufweist und eine Außenverzahnung (7b) umfasst,
- einen Kranz (9), der sich um das Sonnenrad (7) erstreckt und der eine Innenverzahnung (9d) umfasst,
- Planetenräder (8), die mit dem Sonnenrad (7) und dem Kranz (9) in Eingriff stehen und die jeweils eine erste Verzahnung (32) mit einem ersten mittleren Durchmesser (D32), die mit der Verzahnung (7b) des Sonnenrades (7) in Eingriff steht, und eine zweite Verzahnung (28) mit einem zweiten mittleren Durchmesser (D28), der sich vom ersten Durchmesser (D32) der ersten Verzahnung (32) unterscheidet, umfassen, wobei die zweite Verzahnung (28) mit dem zweiten Durchmesser (D28) mit der Innenverzahnung (9d) des Kranzes (9) in Eingriff steht, wobei die Planetenräder (8) von Lagern (26) geführt werden, die von einem Planetenträger (10) getragen werden,
**dadurch gekennzeichnet, dass** das Führungslager (26) jedes Planetenrades (8) hydrodynamisch ist und eine erste glatte Führungsfläche (26c2), die sich um eine Drehachse (Y) des Planetenrades (8), mindestens zum Teil unter der ersten Verzahnung (32) erstreckt, und eine zweite glatte Führungsfläche (26c1) umfasst, die sich von der ersten Fläche (26c1) unterscheidet und sich um die Drehachse (Y) des Planetenrades, mindestens zum Teil unter der zweiten Verzahnung (28) erstreckt, und dadurch, dass sich die erste Fläche (26c2) an einem ersten axialen Abschnitt (36) eines Körpers (27) des hydrodynamischen Lagers (26) befindet, und sich die zweite Fläche (26c1) an einem zweiten axialen Abschnitt (34) des Körpers des hydrodynamischen Lagers (26) befindet, wobei diese zwei axialen Abschnitte (34, 36) durch eine erste ringförmige Wand (38) des Körpers des hydrodynamischen Lagers (26) miteinander verbunden sind.

2. Untersetzungsgetriebe (6) nach Anspruch 1, wobei die erste Fläche (26c2) einen dritten Durchmesser (D26c2) oder dritten mittleren Durchmesser aufweist, der kleiner ist als der erste Durchmesser (D32) der ersten Verzahnung (32), und die zweite Fläche (26c1) einen vierten Durchmesser (D26c1) oder vierten mittleren Durchmesser (D26c1) aufweist, der kleiner ist als der zweite Durchmesser (D28) der zweiten Verzahnung (28).

3. Untersetzungsgetriebe (6) nach Anspruch 1 oder 2, wobei der erste Durchmesser (D32) der ersten Verzahnung (32) größer ist als der zweite Durchmesser (D28) der zweiten Verzahnung (28).

4. Untersetzungsgetriebe (6) nach einem der vorstehenden Ansprüche, wobei die erste ringförmige Wand (38) einen zylindrischen Rand (40) zur axialen Auflage des Planetenrades (8), das an dem hydrodynamischen Lager (26) angebracht ist, umfasst.

5. Untersetzungsgetriebe (6) nach einem der vorstehenden Ansprüche, wobei sich die erste ringförmige Wand (38) in einer Ebene senkrecht zur Drehachse (Y) des Planetenrades (8) erstreckt.

6. Untersetzungsgetriebe (6) nach einem der vorstehenden Ansprüche, wobei die erste ringförmige Wand (38) einen ringförmigen Teil (42) mit C-förmigem Querschnitt umfasst.

7. Untersetzungsgetriebe (6) nach einem der vorstehenden Ansprüche, wobei jedes der Planetenräder (8) einen rohrförmigen Körper (8a) umfasst, der über eine zweite Wand (30') mit der ersten Verzahnung (32) verbunden ist, wobei die zweite Wand (30') Durchgangsöffnungen (50) für den Durchtritt von Öl umfasst.

8. Untersetzungsgetriebe (6) nach einem der vorstehenden Ansprüche, wobei sich die erste Fläche (26c2) mindestens zum Teil um die zweite Fläche (26c1) erstreckt.

9. Untersetzungsgetriebe (6) nach einem der vorstehenden Ansprüche, wobei die erste Fläche (26c2) eine Länge (L26c2) aufweist, die mehr als 20 % einer Länge (L26c1) der zweiten Fläche (26c1) darstellt.

10. Untersetzungsgetriebe (6) nach einem der vorstehenden Ansprüche, wobei die erste und die zweite Fläche (26c2, 26c1) achsversetzt sind.

11. Untersetzungsgetriebe (6) nach einem der vorstehenden Ansprüche, wobei mindestens eine der ersten und der zweiten Fläche (26c2, 26c1) zylindrisch ist.

12. Untersetzungsgetriebe (6) nach einem der Ansprüche 1 bis 10, wobei mindestens eine der ersten und der zweiten Fläche (26c2, 26c1) im Querschnitt elliptisch ist.

13. Untersetzungsgetriebe (6) nach einem der vorstehenden Ansprüche, wobei ein erster axialer Abschnitt des Planetenrades (8) eine zylindrische Innenfläche (32a) mit einem fünften Durchmesser (D32a) aufweist, und ein zweiter axialer Abschnitt des Planetenrades (8) eine zylindrische Innenfläche (28a) mit einem sechsten Durchmesser (D28a) aufweist, wobei der fünfte Durchmesser (D32a) kleiner ist als der sechste Durchmesser (D28a).

14. Untersetzungsgetriebe (6) nach einem der Ansprüche 1 bis 12, wobei ein erster axialer Abschnitt des Planetenrades (8) eine zylindrische Innenfläche (32a) mit einem fünften Durchmesser (D32a) aufweist, und ein zweiter axialer Abschnitt des Planetenrades (8) eine zylindrische Innenfläche (28a) mit einem sechsten Durchmesser (D28a) aufweist, wobei der fünfte Durchmesser (D32a) größer ist als der sechste Durchmesser (D28a).

15. Turbomaschine (1) für ein Luftfahrzeug, das ein Untersetzungsgetriebe (6) nach einem der vorstehenden Ansprüche umfasst.

## Claims

1. A mechanical gearbox (6) for a turbomachine (1), in particular of an aircraft, this gearbox comprising:
- a sun gear (7) having an axis (X) of rotation and comprising an external toothing (7b),
- a ring gear (9) which extends around the sun gear (7) and which comprise an internal toothing (9d),
- planet gears (8) which are meshed with the sun gear (7) and the ring gear (9) and which each comprise a first toothing (32) with a first average diameter (D32) meshed with the toothing (7b) of the sun gear (7), and a second toothing (28) with a second average diameter (D28) different from the first diameter (D32) of the first toothing (32), the second toothing (28) with a second diameter (D28) being meshed with the internal toothing (9d) of the ring gear (9), the planet gears (8) being guided by bearings (26) carried by a planet carrier (10),
**characterized in that** the bearing (26) for guiding each planet gear (8) is hydrodynamic and comprises a first smooth guiding surface (26c2) extending about an axis (Y) of rotation of the planet gear (8), at least partly under the first toothing (32), and a second smooth guiding surface (26c1), different from said first surface (26c1) and extending about the axis (Y) of rotation of the planet gear, at least partly under the second toothing (28), and **in that** the first surface (26c2) is located on a first axial portion (36) of a body (27) of the hydrodynamic bearing (26), and the second surface (26c1) is located on a second axial portion (34) of the body of the hydrodynamic bearing (26), these two axial portions (34, 36) being connected together by a first annular web (38) of the body of the hydrodynamic bearing (26).

2. The gearbox (6) according to claim 1, wherein the first surface (26c2) has a third diameter (D26c2) or average third diameter smaller than the first diameter (D32) of the first toothing (32), and the second surface (26c1) has a fourth diameter (D26c1) or average fourth diameter smaller than the second diameter (D28) of the second toothing (28).

3. The gearbox (6) according to claim 1 or 2, wherein the first diameter (D32) of the first toothing (32) is greater than the second diameter (D28) of the second toothing (28).

4. The gearbox (6) according to one of the preceding claims, wherein the first annular web (38) comprises a cylindrical rim (40) for axial support of the planet gear (8) mounted on the hydrodynamic bearing (26).

5. The gearbox (6) according to one of the preceding claims, wherein the first annular web (38) extends in a plane perpendicular to the axis (Y) of rotation of the planet gear (8).

6. The gearbox (6) according to any of the preceding claims, wherein the first annular web (38) comprises an annular part (42) with a C-shaped cross-section.

7. The gearbox (6) according to one of the preceding claims, wherein each of the planet gears (8) comprises a tubular body (8a) connected by a second web (30') to the first toothing (32), said second web (30') comprising through-orifices (50) for an oil passage.

8. The gearbox (6) according to any of the preceding claims, wherein the first surface (26c2) extends at least partially around the second surface (26c1).

9. The gearbox (6) according to any of the preceding claims, wherein the first surface (26c2) has a length (L26c2) that is more than 20% of a length (L26c1) of the second surface (26c1).

10. The gearbox (6) according to any of the preceding claims, wherein the first and second surfaces (26c2, 26c1) are offset.

11. The gearbox (6) according to any of the preceding claims, wherein at least one of the first and second surfaces (26c2, 26c1) is cylindrical.

12. The gearbox (6) according to any one of claims 1 to 10, wherein at least one of the first and second surfaces (26c2, 26c1) is elliptical in cross-section.

13. The gearbox (6) according to any of the preceding claims, wherein a first axial portion of the planet gears (8) has an internal cylindrical surface (32a) having a fifth diameter (D32a), and a second axial portion of the planet gears (8) has an internal cylindrical surface (28a) having a sixth diameter (D28a), the fifth diameter (D32a) being less than the sixth diameter (D28a).

14. The gearbox (6) according to any one of claims 1 to 12, wherein a first axial portion of the planet gears (8) has an internal cylindrical surface (32a) having a fifth diameter (D32a), and a second axial portion (34) of the planet gears (8) has an internal cylindrical surface (28a) having a sixth diameter (D28a), the fifth diameter (D32a) being greater than the sixth diameter (D28a).

15. An aircraft turbomachine (1) comprising a gearbox (6) according to one of the preceding claims.
